# EUROPEAN PATENT SPECIFICATION

(11) **EP 1 833 044 B1**
(45) Date of publication and mention of the grant of the patent: **21.05.2014**
(21) Application number: 06077095.5
(22) Date of filing: 24.11.2006
(51) Int. Cl.: G09G 5/00

(54) **Display device and driving method thereof**
Anzeigevorrichtung und Verfahren zu ihrer Ansteuerung
Dispositif d'affichage et procédé de commande correspondant

(30) Priority: 09.03.2006 KR 20060022043
(43) Date of publication of application: 12.09.2007
(73) Proprietor: Samsung Electronics Co., Ltd., Suwon-si, Gyeonggi-do, 443-742 (KR)
(72) Inventor: Choi, Chang-ik 111-1103, Samsung Raemian Apt., Suwon-si Gyeonggi-do (KR); Kim,Young-chan 103-1504, Daewon Cantaville 1danji, Gyeonggi-do (KR)
(74) Representative: Hylarides, Paul Jacques

(56) References cited:
- US-A1- 2004 027 515
- US-A1- 2004 119 731

## Description

### BACKGROUND OF THE INVENTION

### 1. Field of the Invention

The present general inventive concept relates to a display device and a driving method thereof. More particularly, the present general inventive concept relates to a display device that can be miniaturized and can reduce manufacturing costs, and a driving method thereof.

### 2. Description of the Related Art

A digital visual interface (DVI), which is a standard to transmit digital data generated in a personal computer (PC) to a monitor, has been mainly employed with a device that is connected to a PC, such as a projector for business, a commercial plasma display, and an electric board. Recently, the DVI has been introduced to an electronic appliance including a digital TV, a set-top box, etc.

Such a DVI standard has been developed in order to directly transmit digital data without complicated processes. Generally, digital data is transmitted according to complicated processes as follows: a PC generates digital data and converts the digital data into analog data to transmit to a display device, and then the display device converts again the received analog data into digital data.

In accordance with requests of content providers providing this digital data, service providers and electronic appliance providers employ DVI instead of various interfaces such as an IEEE 1394 and an analog connector.

To employ the DVI, a display data channel (DDC) is indispensable. The DDC is a standard that changes recognition information of a display device between a host device outputting image information such as a personal computer (PC) and a display device, and sets a display setting of the display device. The recognition information, for example, may indicate an attribute of the display device such as an optimal resolution.

The display device employing the DVI standard includes a DVI connector having a DDC channel, such as SDA and SCL, to transmit and receive the recognition information, such as extended display identification data (EDID).

Generally, the display device employing the DVI standard needs various functions besides its basic function in which the display device is connected to a PC to receive the processed image signal from the PC and display an image. The various functions include, for example, a function of displaying an image using an image signal output from an image reproducing device such as a DVD player.

Additionally, the display device needs functions of displaying an image using digital image information that is output from a host system, which provides image information, such as the PC and the DVD, and also using analog image information that is output from a PC.

Accordingly, when the digital image information and the analog image information are transmitted and received through the DVI connector, the appropriate recognition information corresponding to the signal transmission scheme should be output to the host device, since the recognition information of the display device corresponding to the digital signal transmission scheme and that corresponding to the analog signal transmission scheme are different from each other.

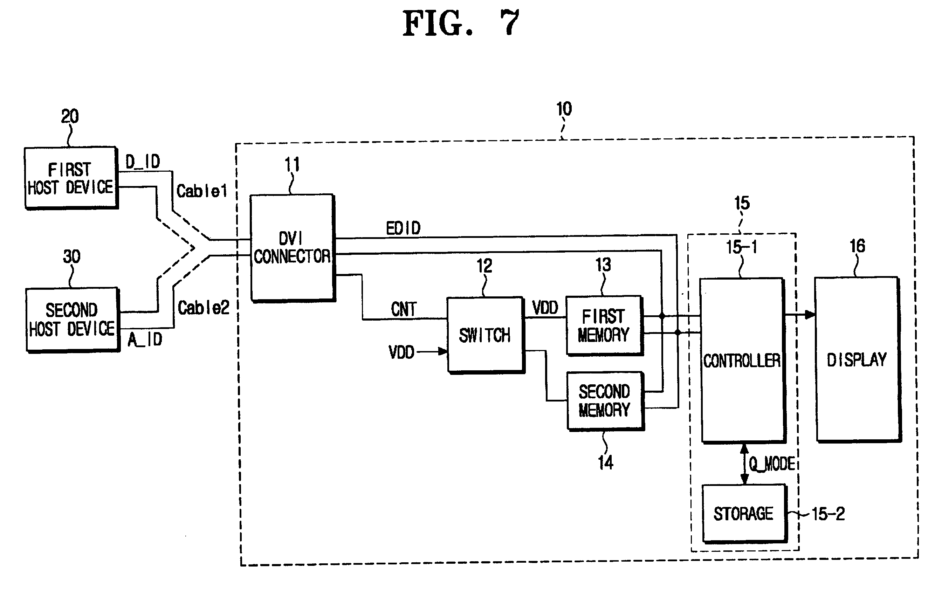

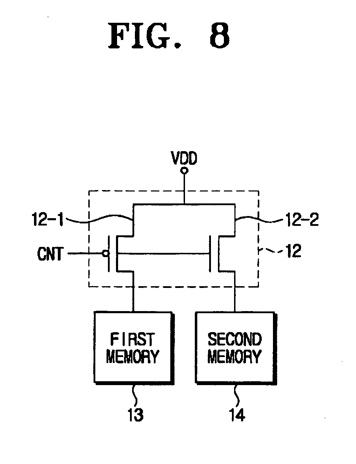

FIG. 7 is a schematic block diagram of a display device 10 according to a comparative example, and FIG. 8 is a view of an example of a switch 12 illustrated in FIG. 7.

Referring to FIG. 7, the display device 10 includes a DVI connector 11, a switch 12, a first memory 13, a second memory 14, a control unit 15 including a controller 15-1 and a storage unit 15-2, and a display 16.

In detail, the DVI connector 11 transmits and receives digital image information D_ID and the analog image information A_ID to and from external host devices 20 and 30, respectively. At this time, the display device 10 may transmit and receive the digital and analog image information to and from one host device such as a PC.

The switch 12 selectively provides the driving voltage VDD to the first memory 13 and the second memory 14 depending on a transmission scheme of the image information. The operations of the switch 12 are as follows.

When the display device 10 is connected to the first host device 20, a first transmission cable (hereinafter referred to as "cable 1") may be connected to the DVI connector 11, which has a 24 pin DVI-D terminal transmitting and receiving the digital image information. Additionally, in order to connect the display device 10 to the second host device 30, a second transmission cable (hereinafter referred to as "cable 2") may be connected to the DVI connector 11, which has a 15 pin D-SUB terminal transmitting and receiving the analog image information.

The connected terminals of the transmission cable 1 and the transmission cable 2 are different from each other. Accordingly, when transmission cable 2 is connected, some signal pins of the DVI connector 11 are not connected to transmission cable 2, and a certain pin among these signal pins is pre-set as a status check pin.

At this time, high voltage potential levels are basically applied to the signal pins of the DVI connector 11, and also to the status check pin. The potential levels of the status check pin are different between when the transmission cable 1 is connected and when transmission cable 2 is connected.

The switch 12 receives the potential levels of the status check pin, which are differently formed when transmission cable 1 is connected and when transmission cable 2 is connected, as a control signal CNT to perform switching.

For example, as illustrated in FIG. 8, when the status check pin of the DVI connector 11 is connected through transmission cable 1 to the switch 12, the status check pin is connected to a ground terminal GND of the first host device 200 and its status is changed to a low potential level. This low potential level is applied as a control signal CNT of the switch 12, and accordingly, a first switch element 12-1 is activated so that the driving voltage VDD is applied to the first memory 13 and the first memory 13 is activated.

In contrast, if the status check pin of the DVI connector 11 is connected through transmission cable 2, the status check pin is formed in a floating status and its high potential level is maintained. The high potential level is applied as a control signal CNT of the switch 12, and accordingly, a second switch element 12-2 is activated so that the driving voltage VDD is applied to the second memory 14 and the second memory 14 is activated.

The first memory 13 stores the recognition information corresponding to the digital image information, for example, digital EDID information, and the second memory 14 stores the recognition information corresponding to the analog image information, for example, analog EDID information.

Accordingly, one of the first memory 13 and the second memory 14 is selectively activated by the driving voltage VDD that is selectively provided by the switch 12. The digital and analog EDID information stored in each of the first memory 13 and the second memory 14 is read to the DVI connector 11 depending on the control signals output from the controller 15-1 and transmitted to the host devices 20 and 30.

By the above process, the host devices 20 and 30 determine the attribute of the display device 10 based on recognition information REC_D1 and REC_D2 output from the display device 10, and transmit control signals to the display device 10 to set an image quality mode Q_mode of the display 16, in response to the recognition information REC_D1 and REC_D2. The image quality mode Q_mode set by the display device 10 is stored into the storage 15-2.

The host devices 20 and 30 transmit the digital or analog image information D_ID or A_ID to the display device 10 according to the digital or analog transmission scheme, and display a certain image on the display 16 in response to the stored image quality mode Q_mode and the digital or analog image information D_ID or A_ID.

Generally, the first memory 13 and the second memory 14 are configured as a non-volatile memory such as an EEPROM to store the recognition information even when power is not supplied to the display device 10.

In the case of an analog transmission scheme, the recognition information is read from the second memory 14 so that the image information can be output from the second host device 30, according to the characteristics of the analog transmission scheme, even when power is not supplied to the display device 10. However, in the case of a digital transmission scheme, the recognition information cannot be read from the first memory 13 when power is not supplied to the display device 10. In this case, the image information itself may be blocked from being output from the first host device 20 so that separate memories 13 and 14 are provided as illustrated in FIG. 8 to prevent this problem.

However, if each memory is provided to store the recognition information which corresponds to each transmission scheme depending on the transmission scheme of the image information, it is difficult to miniaturize the display device and reduce its manufacturing costs.

From US-A-2004/0027515 a device and method are known, wherein digital EDID's and analog EDID's are both stored in a non-volatile memory, such as an EEPROM, to be loaded into a RAM memory of a control unit. Likewise, US-2004/119731 discloses a configuration having two storages for analogue and digital EDID's.

### SUMMARY OF THE INVENTION

The present general inventive concept provides a display device that can reduce the amount of memory used so that the size of the display device can be miniaturized, resulting in reduced manufacturing costs.

The present general inventive concept also provides a driving method of the display device.

Additional aspects and utilities of the present general inventive concept will be set forth in part in the description which follows and, in part, will be obvious from the description, or may be learned by practice of the general inventive concept

The foregoing and/or other aspects and utilities of the present general inventive concept may be achieved by providing a display device including all features of appended independent claim 1.

The foregoing and/or other aspects and utilities of the present general inventive concept may also be achieved by providing a method of driving a display device which exhibits all feature steps of claim 5.

The foregoing and/or other aspects and utilities of the present general inventive concept may be achieved by providing a display device including an interface to receive different types of image information from corresponding different hosts, each having different transmission schemes in which to communicate with the respective host, a memory to store recognition information corresponding to a specified transmission scheme, and to output the recognition information corresponding to the specified transmission scheme through the interface to the corresponding host if the image information received by the interface corresponds to the specified transmission scheme and a control unit to store recognition information corresponding to an unspecified transmission scheme, and to output the recognition information corresponding to an unspecified transmission scheme through the interface to the corresponding host if the image information received by the interface corresponds to the unspecified transmission scheme.

### BRIEF DESCRIPTION OF THE DRAWINGS

The above aspects and features of the present general inventive concept will be more apparent by describing certain embodiments of the present general inventive concept with reference to the accompanying drawings, in which:
FIG. 1 is a schematic block diagram of a display device according to an exemplary embodiment of the present general inventive concept;
FIG. 2 is a view explaining operations of each member depending on a transmission scheme of image information applied to the display device illustrated in FIG. 1 according to an exemplary embodiment of the present general inventive concept;
FIG. 3 is a view of a switch illustrated in FIG. 1 according to an exemplary embodiment of the present general inventive concept;
FIG. 4 is a flowchart of a driving method of a display device according to an exemplary embodiment of the present general inventive concept;
FIG. 5 illustrates registers of a control unit explaining a driving method of a display device illustrated in FIG. 4 according to an exemplary embodiment of the present general inventive concept;
FIG. 6 illustrates a part of source codes explaining a driving method of a display device illustrated in FIG. 4 according to an exemplary embodiment of the present general inventive concept;
FIG. 7 is a schematic block diagram of a display device according to a related art of the present general inventive concept; and
FIG. 8 illustrates an example of a switch illustrated in FIG. 7.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

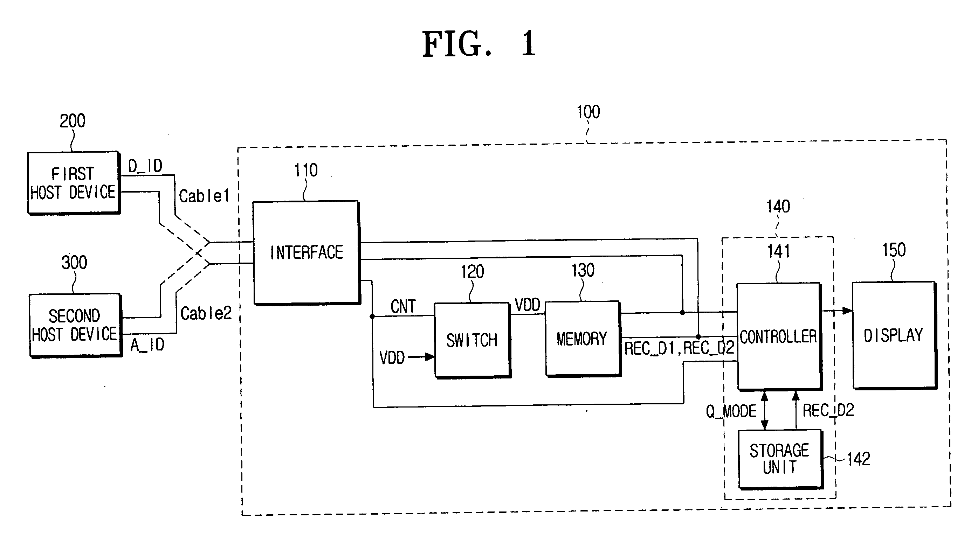

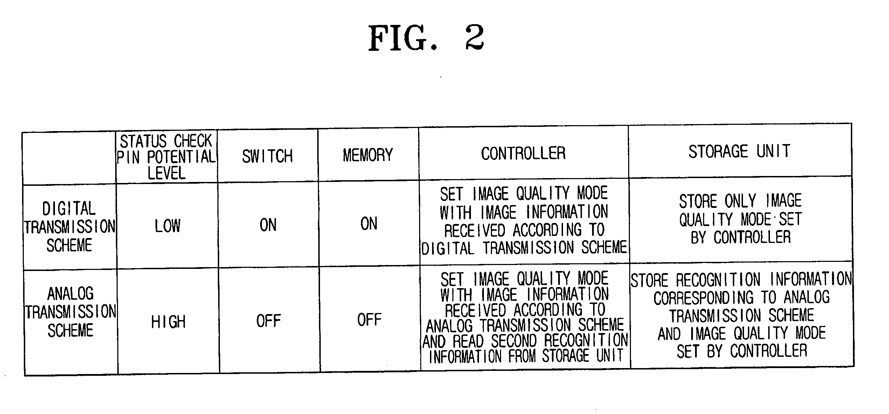

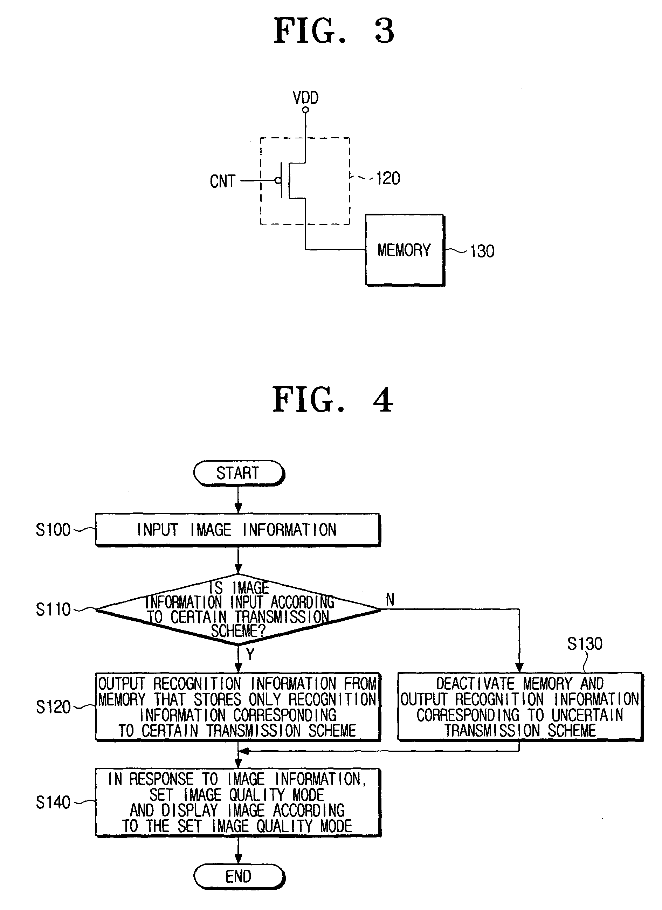

FIG. 1 is a schematic block diagram of a display device 100 according to an exemplary embodiment of the present general inventive concept, FIG. 2 is a view explaining operations of each member depending on a transmission scheme of image information applied to the display device 100 illustrated in FIG. 1 according to an exemplary embodiment of the present general inventive concept, and FIG. 3 is a view of a switch 120 illustrated in FIG. 1 according to an exemplary embodiment of the present general inventive concept.

Referring to FIG. 1, the display device 100 according to an exemplary embodiment of the present general inventive concept includes an interface 110, a switch 120, a memory 130, a control unit 140, and a display 150.

In detail, the interface 110 receives image information from external host devices 200 and 300, and the display device 100 communicates through the interface 110 with the host devices 200 and 300. The interface 110 may receive a digital image signal D_ID from a first host device 200 according to a digital transmission scheme, an analog image signal A_ID from a second host device 300 according to an analog transmission scheme, and digital and analog image information from one host device such as a PC.

The interface 110 may include a DVI connector having a plurality of signal pins. The DVI connector includes DDC channels SDA and SCL to employ the DDC. The image information includes DDC_DATA, DDC_CLK signal, and EDID signal to perform an interface between the host devices 200 and 300 and the display device 100 through the DDC channels SDA and SCL, and an image data signal received through the DVI connector to display a certain image.

The switch 120 is selectively activated by the signal transmission scheme of the image information applied to the interface 110 to provide the driving voltage VDD, received from the outside, to the memory 130.

When the image information, input to the interface 110, is applied according to a digital transmission scheme and an analog transmission scheme depending on whether the image information is a digital image signal provided from the first host device 200 or an analog image signal provided from the second host device 300, the switch 120 specifies one of the digital transmission scheme and the analog transmission scheme to provide the driving voltage VDD to the memory 130.

In the present exemplary embodiment, for example, the digital transmission scheme is used as a specified transmission scheme, and the switch 120 is activated when the image information is input according to the digital transmission scheme. To activate the switch 120 when the image information is input according to the digital transmission scheme, the following method is used.

Referring to FIGS. 1 and 2, transmission cables are connected to the interface 110 to perform an interface with the host devices 200 and 300. In a case of the digital transmission scheme, for example, a first transmission cable (hereinafter referred to as "transmission cable 1") with a 24pin DVI-D terminal may be connected to the interface 110 to transmit and receive the digital image information. In a case of the analog transmission scheme, for example, a second transmission cable (hereinafter referred to as "transmission cable 2") with 15pin D-SUB terminal may be connected to the interface 110 to transmit and receive the analog image information.

Accordingly, the signal pins of the interface 100 connector (i.e. DVI connector) connected to each cable are differentiated between when the transmission cable 1 is connected to the interface 110 and when the transmission cable 2 is connected to the interface 110. When the transmission cable 2 is connected, one of the signal pins which is not connected to the second host device 300, is pre-set as a status check pin.

The pre-set status check pin has each different potential level when the transmission cable 1 is connected and when the transmission cable 2 is connected.

In detail, a high voltage potential level can basically be applied to the interface 110 so that the status check pin has a high potential level, and if the transmission cable 1 is connected, the status check pin can be connected to the ground terminal GND of the first host device 200 so as to have a low potential level LOW. If the transmission cable 2 is connected to the interface 110, the status check pin can float with the second host device 300 so as to maintain a high potential level HIGH.

As illustrated in FIG. 3, the switch 120 receives the potential level of the status check pin as a control signal CNT to perform a switching operation. In detail, the switch 120 is activated by the control signal CNT at the low potential level LOW so as to provide the driving voltage VDD, applied from the exterior, to the memory 130 only when the status check pin of the interface 110 is connected to the transmission cable 1.

The memory 130 is activated by the driving voltage VDD that is selectively provided from the switch 120 when the image information is applied from the first host device 200 according to a digital transmission scheme. A recognition information REC_D1 (hereafter, referred to as the first recognition information), which corresponds to the specified transmission scheme and is stored in the memory 130, for example, the digital EDID Corresponding to the digital transmission scheme, is read in response to a command to read the image information, which is applied from the first host device 200, for example, recognition information REC contained in the image information. The read first recognition information REC_D1 is provided to the interface 110 and transmitted to the first host device 200.

The memory 130 may be a non-volatile memory EEPROM to store the first recognition information REC_D1 even when power is not supplied to the display device 100.

The control unit 140 controls the display device 100, and more particularly, sets an image quality mode Q_mode of the display 150, controls general operations of the display 150, and stores the set image quality mode Q_mode. To this end, the control unit 140 includes a controller 141 to set an image quality mode of the display 150 and control operations of the display 150, and a storage unit 142 to store the set image quality mode Q_mode.

If the image information is received according to an unspecified transmission scheme such as an analog transmission scheme from the second host device 300, the control unit 140 reads second recognition information REC_D2 from the storage unit 142, which has the second recognition information REC_D2 stored therein corresponding to the analog transmission scheme, to provide to the interface 110. The operation of the control unit 140 will be explained in detail below.

Referring to FIGS. 1 and 2, if the image information is received according to the digital transmission scheme from the first host device 200, the controller 141 sets an image quality mode MODE_D of the display 150 in response to the image information received according to the digital transmission scheme, and stores the set image quality mode MODE_D into the storage unit 142. The controller 141 also controls the display 150 to display an image with a certain image quality mode in response to the set image quality mode MODE_D and the image information received according to the digital transmission scheme.

At this time, the controller 141 is connected to the status check pin of the interface 110, and receives the changing potential level of the status check pin as a control signal to determine the transmission scheme of the image information input to the interface 110. In other words, for example, if the status check pin of the interface 110 is in a low potential level, the controller 141 determines that the transmission scheme of the image information is a digital transmission scheme, and ignores the command to read the recognition information REC included in the header of the image information received from the first host device 200. Accordingly, if the image information is transmitted according to a digital transmission scheme, the controller 141 prevents the second recognition information REC_D2, stored in the storage unit 142, from being read.

Then, if the image information is received from the second host device 300 according to an analog transmission information, in response to the image information received according to the analog transmission scheme, the controller 141 reads the second recognition information REC_D2, pre-stored in the storage unit 142, and provides the second recognition information REC_D2 to the interface 110.

In the storage unit 142, according to an address allocation scheme, a certain address is configured as an address that stores data such as VCP_CODE according to a video electronics standards association (VESA) that sets an image quality mode, and another address other than the certain address is configured as an address that stores the second recognition information REC_D2. To this end, the storage unit 142 may be a non-volatile memory EEPROM so as to store the data regarding the image quality mode and the second recognition information REC_D2 even if power is not supplied to the display device 100.

In response to the image information received from the second host device 300 according to the analog transmission scheme, the controller 141 reads the second recognition information REC_D2 that is stored as 2Bi in the storage unit 142 according to the VESA.

The controller 141 reads the second recognition information REC_D2 to convert it into 2B according to VESA, and provides the converted second recognition information REC_D2 to the interface 110 so as to be interfaced with the host devices 200 and 300.

The controller 141 sets an image quality mode MODE_D of the display 150 based on the image information received according to the analog transmission scheme. The set image quality mode MODE_D is stored at a certain address of the storage unit 142.

The controller 141 is connected to the status check pin of the interface 110 and receives the potential level of the status check pin as a control signal so as to determine a transmission scheme of the image information input to the interface 110. In detail, if the status check pin of the interface 110 is in a high potential level, the controller 141 determines the transmission scheme of the image information is an analog one, and performs the command to read the recognition information REC included in the header of the image information received from the second host device 300. Accordingly, if the image information is transmitted according to an analog transmission scheme, the controller 141 reads the second recognition information REC_D2 stored in the storage unit 142. At this time, the switch 120 is deactivated by the high potential level of the status check pin, and the first recognition information REC_D1 is prevented from being read.

In other words, if the image information is received according to the digital transmission scheme in response to the control signal CNT of the low potential level, the controller 141 prevents the second recognition information REC_D2 from being read from the storage unit 142. If the image information is received according to the analog transmission scheme, the controller 141 reads the second recognition information REC_D2. The control unit 140 may be a micro controller unit (MCU) or a scaler.

In the present exemplary embodiment, the controller 141 and the storage unit 142 are illustrated as being provided in one control unit 140.

Additionally, the switch 120 may be selectively activated under the control of the control unit 140.

The display 150 displays a certain image in response to the image quality mode Q_mode set by the control unit 140 and the received image information, particularly the image data signal.

FIG. 4 is a flowchart of a driving method of a display device according to an exemplary embodiment of the present general inventive concept.

Referring to FIGS. 1 and 4, the driving method of the display device according to an exemplary embodiment of the present general inventive concept includes inputting image information (operation S100), determining a transmission scheme of the image information (operation S110), if the determined transmission scheme is a specified transmission scheme, reading the first recognition information from the memory, which stores the first recognition information corresponding to the specified transmission scheme, to provide to the host device (operation S120), if the determined transmission scheme is an unspecified transmission scheme, reading the second recognition information, which corresponds to the unspecified transmission scheme and is stored into the control unit that controls the driving of the display device, to provide to the host device (operation S130), and setting an image quality mode by the image information provided according to each transmission scheme from the host device in response to the recognition information and displaying the image information as a certain image with the set image quality (operation S140).

In operation S100, the image information is input through the interface 110 to the display device 100 from the first host device 200, the second host device 300, or one host device according to each different transmission scheme such as a digital transmission scheme or an analog transmission scheme.

In operation S110, the display device 100 determines that the image information is received according to a specified transmission scheme, that is, a digital transmission scheme, from the first host device 200 when the pre-set status check pin of the interface 110 is in a low potential level, that is, in a ground voltage as explained with reference to FIG. 1. In contrast, if the status check pin is in a high potential level, the display device 100 determines that the image information is received according to an unspecified transmission scheme, that is, an analog transmission scheme, from the second host device 300, or one host device according to each of the digital transmission scheme and analog transmission scheme.

In operation S120, if the image information is received from the first host device 200 according to the digital transmission scheme, the switch 120 is activated by the potential level of the status check pin that is configured in a low potential level, and transmits the driving voltage VDD to the memory 130 to activate the memory 130.

At this time, only the first recognition information REC_D1 is stored in the memory 130, and the first recognition information REC_D1 is read from the memory 130 as a result of a command to read the image information, i.e. the recognition information REC, received from the first host device 200. At this time, as the status check pin is in a low potential level, the control unit 140 ignores the command to read the recognition information REC so as to prevent the second recognition information REC_D2 stored in the storage unit 142 from being read. The read first recognition information REC_D1 is transmitted via the interface 110 to the first host device 200.

In operation S130, if the image information is received from the second host device 300 according to the analog transmission scheme, the switch 120 is deactivated by the potential level of the status check pin that maintains a high potential level, and the driving voltage VDD cannot be transmitted to the memory 130 so that the memory 130 is deactivated.

The image information transmitted to the interface 110 is applied to the control unit 140, which performs the command to read the recognition information as the status check pin of the interface 110 is in a high potential level. In other words, in response to the command to read the recognition information, the controller 141 reads the second recognition information REC_D2 stored in the storage unit 142 to convert the information into the signal that can be interfaced and outputs the converted second recognition information REC_D2 through the interface 110.

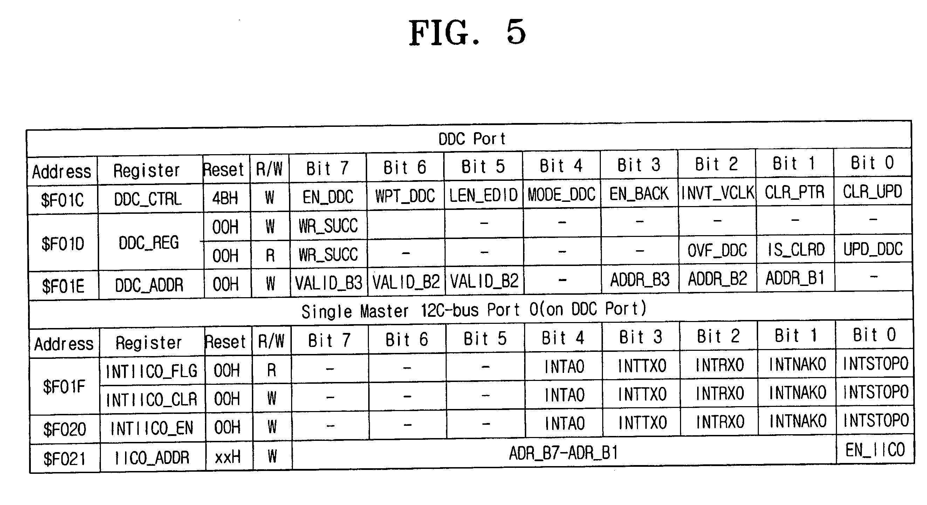

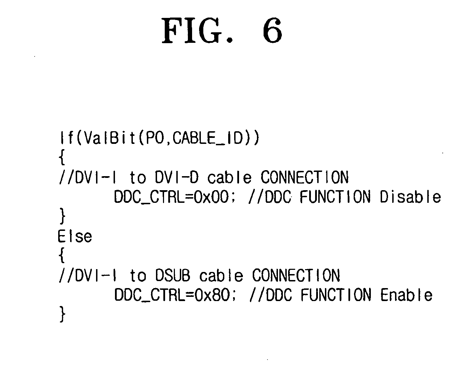

To determine the potential level of the status check pin, the control unit 140 includes registers illustrated in FIG. 5, and stores source codes so that the control unit 140 can selectively perform DDC depending on the potential level of the status check pin, as shown in FIG. 6

For example, when the first host device 200 is connected to the interface 110 and the status check pin is in a low potential level, the control unit 140 determines the potential level of the status check pin, and the DDC_CNRL register is coded to a pre-set value 0X00 of IF conditional sentence so that DDC function can be deactivated. Accordingly, the control unit 140 prevents the second recognition information REC_D2 from being read from the storage unit 142.

In contrast, if the second host device 300 is connected to the interface 110 and the status check pin is maintained as a high potential level, the control unit 140 determines the potential level of the status check pin, and the DDC_CNRL register is coded to a pre-set value OX80 of IF conditional sentence so that DDC function can be activated. Accordingly, the control unit 140 reads the second recognition information REC_D2 from the storage unit 142.

The operations S120 and 130 are operated complementarily to each other depending on the transmission scheme of the received image information. In other words, the information on the potential level change of the status check pin is provided to both the switch 120 and the control unit 140, and if the switch 120 is activated, the control unit 140 prevents the second recognition information REC_D2 from reading from the storage unit 142.

In the opposite case, the switch 120 is deactivated and the first recognition information REC_D1 is prevented from being read from the memory 130 and the second recognition information REC_D2 is read from the storage unit 142 by the controller 141.

In response to the recognition information REC_D1 and REC_D2 output from operations S120 and S130, the operation S140 sets an image quality mode MODE_D of the display 150 based on a control signal provided from the first host device 200 or the second host device 300 and displays a certain image on the display 150 in response to the image quality mode set in each case and the received image information.

As described above, according to exemplary embodiments of the present general inventive concept, the number of used memory devices is reduced so that the display device can be miniaturized and manufacturing costs can be reduced, wherein the memory devices each store different recognition information that is output in response to the image information transmission scheme.

Although a few embodiments of the present general inventive concept have been shown and described, it will be appreciated by those skilled in the art that changes may be made in these embodiments without departing from the scope of protection for the invention as defined in the appended claims.

## Claims

1. A display device comprising:
- an interface (110) to receive image information from at least one host device (200; 300) according to one of an analogue and a digital transmission scheme to communicate with the host device;
- a memory (130) to store digital extended display identification data (EDID) corresponding to the digital transmission scheme;
- a storage unit (142) to store the analogue EDID; and
- a control unit (140) to control a driving of the display device,
wherein the control unit (140) further includes the storage unit (142) to store the analogue EDID corresponding to the analogue transmission scheme in the storage unit (142), wherein, if the image information is applied according to the analogue transmission scheme, the control unit (140) is arranged to read the analogue EDID from the storage unit (142) and to output the read analogue EDID through the interface (110) to the host device (130) and, if the image information is applied according to the digital transmission scheme, the memory (130) is arranged to output the digital EDID through the interface (110) to the host device (200),
wherein the interface (110) comprises a plurality of signal pins, and at least one of the signal pins is set as a status check pin to determine the transmission schemes, and the status check pin has a different potential level depending on the transmission schemes,
the display device further comprising a switch (120) which is selectively activated depending on a potential level of the status check pin to selectively provide a driving voltage to the memory (130),
wherein the control unit (140) is connected to the status check pin to provide the analogue EDID to the interface (110) depending on the potential level of the status check pin, wherein the control unit (140) includes a controller (141) to set an image quality mode of the display (150) and control operations of the display (150), and the storage unit (142) is arranged to store the set image quality mode Q_mode.

2. The display device as claimed in claim 1, wherein the interface comprises a digital visual interface-integrated (DVI-I) connector.

3. The display device as claimed in claim 1, wherein the storage unit (142) stores the image quality mode (Q_Mode) set in response to the image information, and the analogue EDID is stored to the storage unit (142) according to an address allocation scheme.

4. The display device as claimed in claim 1, wherein the control unit (140) reads the analogue EDID from the storage unit (142) in response to the image information applied according to the analogue transmission scheme.

5. A method of driving a display device which receives image information from at least one host device and communicates with the host device to display an image, the method comprising:
- receiving the image information;
- determining whether a transmission scheme of the image information is analogue or digital;
- reading digital extended display identification data (EDID) from a memory which stores the digital EDID corresponding to the digital transmission scheme, if the determined transmission scheme is the digital transmission scheme, and providing the read digital EDID to the host device; and
- reading an analogue EDID from a storage unit for the analogue EDID, if the determined transmission scheme is the analogue transmission scheme, and providing the read analogue EDID to the host device,
where a control unit controls a driving of the display device, wherein the control unit used to store the analogue EDID corresponding to the analogue transmission scheme is included in the control unit;
wherein determining the transmission scheme of the image information comprises determining a change of a potential level of a signal pin that is set as a status check pin among a plurality of signal pins included in the interface,
wherein the status check pin has a different potential level depending on the transmission schemes,
further comprising selectively activating a switch (120) depending on a potential level of the status check pin to selectively provide a driving voltage to the memory (130), wherein the control unit (140) is connected to the status check pin to provide the analogue EDID to the interface (110) depending on the potential level of the status check pin, wherein the control unit includes a controller, using the controller, setting an image quality mode of the display and controlling operations of the display, and storing, in the storage unit (142), the set image quality mode Q_mode.

6. The method as claimed in claim 5, wherein the image information is received through a digital visual interface-integrated (DVI-I) connector.

7. The method as claimed in claim 5, further comprising:
- if the image information is transmitted according to the digital transmission scheme, providing a driving voltage to the memory to activate the memory; and
- if the image information is transmitted according to the analogue transmission scheme, preventing the driving voltage from being provided to the memory to deactivate the memory.

8. The method as claimed in claim 5, wherein if the status check pin is not connected to the host device, the status check pin is in a high potential level, and if the status check pin is connected to the host device, the status check pin is in a low potential level.

9. The method as claimed in claim 5, wherein reading the digital EDID activates the memory to read the digital EDID, and prevents the analogue EDID from being read from the storage unit of the control unit.

10. The method as claimed in claim 5, wherein reading the analogue EDID deactivates the memory to prevent the digital EDID from being read, and reads the analogue EDID that is stored in the storage unit of the control unit according to an address allocation scheme.

11. The method as claimed in claim 5, further comprising:
in response to recognition information, setting an image quality mode by image information provided from the host device according to each of the analogue and digital transmission schemes, and displaying the image information as a certain image with the set image quality mode.

12. The method as claimed in claim 11, wherein the displaying the image information as the certain image stores the set image quality mode into the control unit, and displays the image information as the certain image depending on the image quality mode stored in the control unit.

## Patentansprüche

1. Anzeigevorrichtung, umfassend:
- eine Schnittstelle (110) zum Empfangen von Bildinformationen aus zumindest einer Host-Vorrichtung (200; 300) gemäß einem von einem analogen und einem digitalen Übertragungsschema zum Kommunizieren mit der Host-Vorrichtung;
- einen Speicher (130) zum Speichern von dem digitalen Übertragungsschema entsprechenden digitalen erweiterten Displayidentifikationsdaten (EDID);
- eine Speichereinheit (142) zum Speichern der analogen EDID; und
- eine Steuerungseinheit (140) zum Steuern eines Ansteuerns der Anzeigevorrichtung,
wobei die Steuerungseinheit (140) weiterhin die Speichereinheit (142) zum Speichern der dem analogen Übertragungsschema entsprechenden analogen EDID in der Speichereinheit (142) beinhaltet, wobei, falls die Bildinformationen gemäß dem analogen Übertragungsschema angewandt werden, die Steuerungseinheit (140) dazu eingerichtet ist, die analogen EDID aus der Speichereinheit (142) auszulesen und die ausgelesenen analogen EDID durch die Schnittstelle (110) an die Host-Vorrichtung (300) auszugeben, und falls die Bildinformationen gemäß dem digitalen Übertragungsschema angewandt werden, der Speicher (130) dazu eingerichtet ist, die digitalen EDID durch die Schnittstelle (110) an die Host-Vorrichtung (200) auszugeben,
wobei die Schnittstelle (110) eine Vielzahl von Signalpins umfasst, und zumindest einer der Signalpins als Zustandsüberprüfungspin festgelegt ist, um die Übertragungsschemen festzustellen, und der Zustandsüberprüfungspin je nach Übertragungsschema einen anderen Potentialpegel aufweist,
wobei die Anzeigevorrichtung weiterhin einen Schalter (120) umfasst, der in Abhängigkeit von einem Potentialpegel des Zustandsüberprüfungspins selektiv aktiviert wird, um eine Ansteuerspannung für den Speicher (130) selektiv bereitzustellen,
wobei die Steuerungseinheit (140) mit dem Zustandsüberprüfungspin verbunden ist, um der Schnittstelle (110) die analogen EDID in Abhängigkeit vom Potentialpegel des Zustandsüberprüfungspins bereitzustellen,
wobei die Steuerungseinheit (140) einen Controller (141) beinhaltet, um einen Bildqualitätsmodus der Anzeige (150) einzustellen und Funktionen der Anzeige (150) zu steuern, und die Speichereinheit (142) dazu eingerichtet ist, den eingestellten Bildqualitätsmodus Q_mode zu speichern.

2. Anzeigevorrichtung nach Anspruch 1, wobei die Schnittstelle einen digitalen visuellen Schnittstellen-integrierten (DVI-I) Verbinder umfasst.

3. Anzeigevorrichtung nach Anspruch 1, wobei die Speichereinheit (142) den in Reaktion auf die Bildinformationen eingestellten Bildqualitätsmodus (Q_Mode) speichert, und die analogen EDID in der Speichereinheit (142) gemäß einem Adressenzuordnungsschema gespeichert sind.

4. Anzeigevorrichtung nach Anspruch 1, wobei die Steuerungseinheit (140) die analogen EDID aus der Speichereinheit (142) in Reaktion auf die gemäß dem analogen Übertragungsschema angewandten Bildinformationen ausliest.

5. Verfahren zur Ansteuerung einer Anzeigevorrichtung, die Bildinformationen aus zumindest einer Host-Vorrichtung empfängt und mit der Host-Vorrichtung kommuniziert, um ein Bild anzuzeigen, wobei das Verfahren umfasst:
- Empfangen der Bildinformationen;
- Feststellen, ob ein Übertragungsschema der Bildinformationen analog oder digital ist;
- Lesen digitaler erweiterter Displayidentifikationsdaten (EDID) aus einem Speicher, der die dem digitalen Übertragungsschema entsprechenden digitalen EDID speichert, falls das festgestellte Übertragungsschema das digitale Übertragungsschema ist, und Bereitstellen der ausgelesenen EDID für die Host-Vorrichtung; und
- Lesen analoger EDID aus einer Speichereinheit für die analogen EDID, falls das festgestellte Übertragungsschema das analoge Übertragungsschema ist, und Bereitstellen der ausgelesenen analogen EDID für die Host-Vorrichtung,
wobei eine Steuerungseinheit ein Ansteuern der Anzeigevorrichtung steuert,
wobei der Steuerungseinheit, die verwendet wird, um die dem analogen Übertragungsschema entsprechenden analogen EDID zu speichern, in der Steuerungseinheit enthalten ist;
wobei das Feststellen des Übertragungsschemas der Bildinformationen das Feststellen einer Veränderung eines Potentialpegels eines Signalpins umfasst, der unter einer Vielzahl in der Schnittstelle enthaltener Signalpins als Zustandsüberprüfungspin festgelegt ist,
wobei der Zustandsüberprüfungspin je nach Übertragungsschema einen anderen Potentialpegel aufweist,
weiterhin umfassend selektives Aktivieren eines Schalters (120) in Abhängigkeit von einem Potentialpegel des Zustandsüberprüfungspins, um eine Ansteuerspannung für den Speicher (130) selektiv bereitzustellen,
wobei die Steuerungseinheit (140) mit dem Zustandsüberprüfungspin verbunden ist, um der Schnittstelle (110) die analogen EDID in Abhängigkeit vom Potentialpegel des Zustandsüberprüfungspins bereitzustellen,
wobei die Steuerungseinheit einen Controller beinhaltet, wobei, mittels des Controllers, ein Bildqualitätsmodus der Anzeige eingestellt wird und Funktionen der Anzeige gesteuert werden, und wobei, in der Speichereinheit (142), der eingestellte Bildqualitätsmodus Q_mode gespeichert wird.

6. Verfahren nach Anspruch 5, wobei die Bildinformationen durch einen digitalen visuellen Schnittstellen-integrierten (DVI-I) Verbinder empfangen werden.

7. Verfahren nach Anspruch 5, das weiterhin umfasst:
- falls die Bildinformationen gemäß dem digitalen Übertragungsschema übertragen werden, Bereitstellen einer Ansteuerspannung für den Speicher, um den Speicher zu aktivieren; und
- falls die Bildinformationen gemäß dem analogen Übertragungsschema übertragen werden, Verhindern des Bereitstellens der Ansteuerspannung für den Speicher, um den Speicher zu deaktivieren.

8. Verfahren nach Anspruch 5, wobei, falls der Zustandsüberprüfungspin nicht mit der Host-Vorrichtung verbunden ist, der Zustandsüberprüfungspin in einem High-Potentialpegel ist, und falls der Zustandsüberprüfungspin mit der Host-Vorrichtung verbunden ist, der Zustandsüberprüfungspin in einem Low-Potentialpegel ist.

9. Verfahren nach Anspruch 5, wobei das Lesen der digitalen EDID den Speicher aktiviert zwecks Lesens der digitalen EDID, und verhindert, dass die analogen EDID aus der Speichereinheit der Steuerungseinheit ausgelesen werden.

10. Verfahren nach Anspruch 5, wobei das Lesen der analogen EDID den Speicher deaktiviert, um zu verhindern, dass die digitalen EDID gelesen werden, und das Lesen der analogen EDID umfasst, die in der Speichereinheit der Steuerungseinheit gemäß einem Adressenzuordnungsschema gespeichert sind.

11. Verfahren nach Anspruch 5, das weiterhin umfasst: in Reaktion auf Erkennungsinformationen, Einstellen eines Bildqualitätsmodus durch Bildinformationen, die von der Host-Vorrichtung gemäß jeweils dem analogen und dem digitalen Übertragungsschema bereitgestellt werden, und Anzeigen der Bildinformationen als bestimmtes Bild mit dem eingestellten Bildqualitätsmodus.

12. Verfahren nach Anspruch 11, wobei das Anzeigen der Bildinformationen als des bestimmten Bilds das Speichern des eingestellten Bildqualitätsmodus in der Steuerungseinheit umfasst, und das Anzeigen der Bildinformationen als des bestimmten Bilds in Abhängigkeit vom in der Steuerungseinheit gespeicherten Bildqualitätsmodus.

## Revendications

1. Dispositif d'affichage comprenant :
- une interface (110) destinée à recevoir des informations d'image en provenance d'au moins un dispositif hôte (200 ; 300) conformément à un schéma de transmission parmi une transmission analogue et une transmission numérique pour communiquer avec le dispositif hôte ;
- une mémoire (130) destinée à stocker des données d'identification d'affichage étendu (EDID) numériques en correspondance avec le schéma de transmission numérique ;
- une unité de stockage (142) destinée à stocker les EDID analogues ; et
- une unité de commande (140) destinée à commander le pilotage du dispositif d'affichage,
en sachant que l'unité de commande (140) comporte en outre l'unité de stockage (142) destinée à stocker les EDID analogues en correspondance avec le schéma de transmission analogue dans l'unité de stockage (142), et, si les informations d'image sont appliquées conformément au schéma de transmission analogue, l'unité de commande (140) est agencée pour lire les EDID analogues en provenance de l'unité de stockage (142) et pour émettre les EDID analogues lues, par le biais de l'interface (110), auprès du dispositif hôte (130) et, si les informations d'image sont appliquées conformément au schéma de transmission numérique, la mémoire (130) est agencée pour émettre les EDID numériques par le biais de l'interface (110), auprès du dispositif hôte (200),
dans lequel l'interface (110) comprend une pluralité de broches de signal, et au moins l'une des broches de signal consiste en une broche de vérification d'état destinée à déterminer les schémas de transmission, et la broche de vérification d'état a un niveau de potentiel différent en fonction des schémas de transmission,
le dispositif d'affichage comprenant en outre un commutateur (120) qui est activé sélectivement en fonction d'un niveau de potentiel de la broche de vérification d'état pour fournir une tension de pilotage à la mémoire (130),
dans lequel l'unité de commande (140) est raccordée à la broche de vérification d'état pour fournir les EDID analogues à l'interface (110) en fonction du niveau de potentiel de la broche de vérification d'état,
dans lequel l'unité de commande (140) comporte un organe de commande (141) destiné à régler un mode de qualité d'image de l'affichage (150) et à commander le fonctionnement de l'affichage (150), et l'unité de stockage (142) est agencée pour stocker le mode de qualité d'image Q_mode réglé.

2. Dispositif d'affichage selon la revendication 1, dans lequel l'interface comprend un connecteur DVI-I (Digital Visual Interface-Integrated).

3. Dispositif d'affichage selon la revendication 1, dans lequel l'unité de stockage (142) stocke un mode de qualité d'image (Q_Mode) réglé en réponse aux informations d'image, et les EDID analogues sont stockées dans l'unité de stockage (142) conformément à un schéma d'allocation d'adresse.

4. Dispositif d'affichage selon la revendication 1, dans lequel l'unité de commande (140) lit les EDID analogues en provenance de l'unité de stockage (142) en réponse aux informations d'image appliquées conformément au schéma de transmission analogue.

5. Procédé de pilotage d'un dispositif d'affichage recevant des informations d'image en provenance d'au moins un dispositif hôte et communiquant avec le dispositif hôte pour afficher une image, le procédé comprenant :
- la réception des informations d'image ;
- la détermination du fait qu'un schéma de transmission des informations d'image est analogue ou digital ;
- la lecture de données d'identification d'affichage étendu (EDID) numériques en provenance d'une mémoire qui stocke les EDID numériques en correspondance avec le schéma de transmission numérique, si le schéma de transmission déterminé est le schéma de transmission numérique ; et la fourniture des EDID numériques lues auprès du dispositif hôte ; et
- la lecture d'une EDID analogue en provenance d'une unité de stockage des EDID analogues, si le schéma de transmission déterminé est le schéma de transmission analogue, et la fourniture des EDID analogues lues auprès du dispositif hôte,
où une unité de commande effectue la commande du pilotage du dispositif d'affichage,
en sachant que l'unité de commande servant à stocker les EDID analogues en correspondance avec le schéma de transmission analogue est comprise dans l'unité de commande ;
dans lequel la détermination du schéma de transmission des informations d'image comprend la détermination d'une modification d'un niveau de potentiel d'une broche de signal qui consiste en une broche de vérification d'état parmi une pluralité de broches de signal comprises dans l'interface,
dans lequel la broche de vérification d'état a un niveau de potentiel différent en fonction des schémas de transmission,
comprenant en outre l'activation sélective d'un commutateur (120) en fonction d'un niveau de potentiel de la broche de vérification d'état pour fournir sélectivement une tension de pilotage à la mémoire (130),
dans lequel l'unité de commande (140) est raccordée à la broche de vérification d'état pour fournir les EDID analogues à l'interface (110) en fonction du niveau de potentiel de la broche de vérification d'état, l'unité de commande comportant un organe de commande,
l'utilisation de l'organe de commande, le réglage d'un mode de qualité d'image de l'affichage et la commande du fonctionnement de l'affichage, et le stockage, dans l'unité de stockage (142), du mode de qualité d'image Q_mode réglé.

6. Procédé selon la revendication 5, dans lequel les informations d'image sont reçues par le biais d'un connecteur DVI-I (Digital Visual Interface-Integrated).

7. Procédé selon la revendication 5, comprenant en outre :
- si les informations d'image sont émises conformément au schéma de transmission numérique, la fourniture d'une tension de pilotage à la mémoire afin d'activer la mémoire ; et
- si les informations d'image sont émises conformément au schéma de transmission analogue, l'empêchement d'une fourniture de tension de pilotage à la mémoire afin de désactiver la mémoire.

8. Procédé selon la revendication 5, dans lequel si la broche de vérification d'état n'est pas raccordée au dispositif hôte, la broche de vérification d'état se trouve dans un niveau de potentiel élevé, et si la broche de vérification d'état est raccordée au dispositif hôte, la broche de vérification d'état se trouve dans un niveau de potentiel faible.

9. Procédé selon la revendication 5, dans lequel la lecture des EDID numériques active la mémoire en vue de la lecture des EDID numériques, et empêche la lecture des EDID analogues en provenance de l'unité de stockage de l'unité de commande.

10. Procédé selon la revendication 5, dans lequel la lecture des EDID analogues désactive la mémoire pour empêcher la lecture des EDID numériques, et entraîne la lecture des EDID analogues stockées dans l'unité de stockage de l'unité de commande conformément à un schéma d'allocation d'adresse.

11. Procédé selon la revendication 5, comprenant en outre :
en réponse à des informations de reconnaissance, le réglage d'un mode de qualité d'image selon les informations d'image fournies par le dispositif hôte conformément à chacun des schémas de transmission parmi une transmission analogue et une transmission numérique, et l'affichage des informations d'image sous la forme d'une certaine image avec le mode de qualité d'image réglé.

12. Procédé selon la revendication 11, dans lequel l'affichage des informations d'image sous la forme de ladite certaine image entraîne le stockage, dans l'unité de commande, du mode de qualité d'image réglé, et entraîne l'affichage des informations d'image sous la forme de ladite certaine image en fonction du mode de qualité d'image stocké dans l'unité de commande.
